# EUROPÄISCHE PATENTANMELDUNG

(11) **EP 1 939 030 A1**
(43) Veröffentlichungstag der Anmeldung: **02.07.2008**
(21) Anmeldenummer: 07122777.1
(22) Anmeldetag: 10.12.2007
(51) Int. Cl.: B60M 3/06

(54) **Verfahren zur Rückspeisung elektrischer Energie von Schienenfahrzeugen**

(30) Priorität: 27.12.2006 DE 102006062424
(71) Anmelder: SIEMENS AKTIENGESELLSCHAFT, 80333 München (DE)
(72) Erfinder: Hein, Gerd, 91074, Herzogenaurach (DE)

(57) **Zusammenfassung**

Die Erfindung betrifft ein Verfahren zur Rückspeisung elektrischer Energie von Schienenfahrzeugen über den Fahrdraht. Es ist vorgesehen, dass der Fahrdraht mit einem Versorgungsnetz des Verkehrsbetriebes in Verbindung steht, das mit einem öffentlichen Netz verbunden ist. Der Einspeisestrom vom öffentlichen Netz in das Versorgungsnetz wird gemessen. Der maximale Rückspeisestrom vom Fahrdraht in das Versorgungsnetz wird aus der Summe der maximalen Rückspeiseleistungen von Unterwerken, die sich zwischen dem Fahrdraht und dem Versorgungsnetz befinden, berechnet. In einer Steuereinheit wird die Differenz aus Einspeisestrom und berechnetem Rückspeisestrom bestimmt und bei negativem Ergebnis erfolgt über eine Steuereinrichtung die Rückspeisung in das Versorgungsnetz.

## Beschreibung

Die Erfindung betrifft ein Verfahren zur Rückspeisung elektrischer Energie von Schienenfahrzeugen über den Fahrdraht.

Mit dem Begriff "Fahrdraht" ist auch eine Stromschiene oder jede andere Einrichtung umfasst, von der das Schienenfahrzeug über einen Stromabnehmer elektrische Energie bekommt.

Während eines Bremsvorganges oder auch bei Fahrten auf einer Gefällstrecke arbeiten die Elektromotoren eines Schienenfahrzeuges generatorisch, so dass elektrische Energie erzeugt wird.

Häufig wird diese erzeugte elektrische Energie in Bremswiderständen in Wärme umgewandelt. Es ist auch schon vorgeschlagen worden, die erzeugte elektrische Energie in das öffentliche Netz zurückzuspeisen. Das öffentliche Netz ist das Netz zur Versorgung der Verbraucher mit elektrischer Energie.

Dazu ist es notwendig, die elektrische Energie, die zurückgespeist werden soll, mittels eines Inverters über einen Transformator zu leiten, damit die zur Zurückspeisung notwendige höhere Spannung erreicht wird. Die elektrische Energie kann dann im öffentlichen Netz über große Entfernungen zu einem Verbraucher geleitet werden.

Es ergibt sich aber die Schwierigkeit, dass zahlreiche Betreiber von öffentlichen Netzen eine solche Rückspeisung von elektrischer Energie aus einem Schienenfahrzeug nicht erlauben.

Der Erfindung liegt die Aufgabe zugrunde, ein Verfahren zur Rückspeisung elektrischer Energie anzugeben, die eine Rückspeisung in das öffentliche Netz verhindert.

Die Aufgabe wird gemäß der Erfindung dadurch gelöst, dass der Fahrdraht mit einem Versorgungsnetz des Verkehrsbetriebes in Verbindung steht, das mit einem öffentlichen Netz verbunden ist, dass der Einspeisestrom vom öffentlichen Netz in das Versorgungsnetz gemessen wird, dass der maximale Rückspeisestrom vom Fahrdraht in das Versorgungsnetz aus der Summe der maximalen Rückspeiseleistungen von Unterwerken, die sich zwischen dem Fahrdraht und dem Versorgungsnetz befinden, berechnet wird, dass in einer Steuereinheit die Differenz aus Einspeisestrom und berechnetem Rückspeisestrom bestimmt wird und dass bei negativem Ergebnis über eine Steuereinrichtung die Rückspeisung in das Versorgungsnetz erfolgt.

Dabei ist von besonderer Bedeutung, dass ein eigenes Versorgungsnetz des Verkehrsbetriebes vorhanden ist. Da dieses Versorgungsnetz dem Betreiber der Schienenfahrzeuge gehört, kann die Rückspeisung elektrischer Energie in dieses Versorgungsnetz erlaubt sein. Um eine Rückspeisung elektrischer Energie aus dem Versorgungsnetz des Verkehrsbetriebes in das öffentliche Netz zu vermeiden, sind genaue Ermittlungen der Ströme notwendig. Nur auf dieser Basis ist eine Rückspeisung in das öffentliche Netz vermeidbar. Zunächst muss bekannt sein, wie groß der Strom vom öffentlichen Netz zum Versorgungsnetz des Verkehrsbetriebes und damit zu den Schienenfahrzeugen und anderen Verbrauchern hin ist. Dazu wird in gewohnter Weise eine Messung des Einspeisestromes durchgeführt, und zwar zwischen dem öffentlichen Netz und dem Versorgungsnetz des Verkehrsbetriebes.

Damit bekannt wird, ob zu einem bestimmten Zeitpunkt der Strom vom öffentlichen Netz zu den Fahrzeugen den in umgekehrter Richtung zurückgespeisten Strom übertrifft oder nicht, wird die maximale Rückspeiseleistung der vorhandenen Unterwerke bestimmt. Daraus ergeben sich die maximal möglichen Rückspeiseströme. Bei dieser Berechnung werden die einzelnen, im Streckenabschnitt vorhandenen Unterwerke berücksichtigt. Es werden nicht direkt die zurückgespeisten Ströme gemessen, da zu einem solchen Zeitpunkt nicht mehr eingegriffen werden könnte.

Es wird nicht die tatsächliche Rückspeisung, sondern die maximal mögliche Rückspeisung berechnet.

Vorteilhaft wird eine Rückspeisung in das öffentliche Netz vermieden, weil durch die Steuereinheit eine Rückspeisung nur zugelassen wird, falls das eigene Versorgungsnetz des Verkehrsbetriebes die Ströme aufnehmen kann. Das ist gegeben, wenn die Differenz aus dem gemessenen Einspeisestrom und aus dem berechneten möglichen Rückspeisestrom positiv ist. Bei Beachtung der Bilanz soll nämlich stets ein restlicher Einspeisestrom übrig bleiben, so dass es nicht zu einer tatsächlichen Rückspeisung elektrischer Energie in das öffentliche Netz kommt.

Sollte die Differenz aus Einspeisestrom und berechnetem Rückspeisestrom einen negativen Wert ergeben, wird die angeschlossene Steuereinheit die Rückspeisung in das öffentliche Netz verhindern.

Mit dem Verfahren nach der Erfindung wird der Vorteil erzielt, dass ein Versorgungsnetz der Verkehrsbetriebe vorhanden ist, das stets aufnahmebereit ist für elektrische Energie, die beim generatorischen Betrieb von Antriebsmotoren in Schienenfahrzeugen erzeugt wird. Eine unkontrollierte Einspeisung in das öffentliche Netz ist nämlich nicht erlaubt.

Um den richtigen Zeitpunkt für ein Einspeisen in das Versorgungsnetz zu erkennen, wird mittels der Leistungen der Unterwerke, die sich zwischen dem Fahrdraht oder der Stromschiene der Schienenfahrzeuge und dem Versorgungsnetz des Verkehrsbetriebes befinden, die für den betrachteten Streckenabschnitt maximale Rückspeiseleistung und damit der maximale Rückspeisestrom berechnet.

Die Stromstärke dieses maximalen Rückspeisestromes wird mit der Stromstärke des momentan gemessenen Einspeisestromes verglichen und nur dann, wenn die Differenz aus Einspeisestrom und Rückspeisestrom positiv ist, wird eine Rückspeisung durchgeführt. Es kann also vorteilhaft niemals zu einer Rückspeisung in das öffentliche Netz kommen.

Beispielsweise wird die Rückspeisung unterbrochen, bis das Ergebnis der Differenz aus Einspeisestrom und berechnetem Rückspeisestrom nicht mehr negativ, sondern positiv ist. Es kommt also nicht zu einem Strom aus den Schienenfahrzeugen in das öffentliche Netz.

Nach einem anderen Beispiel wird die Rückspeisung nicht unterbrochen, sondern nur schrittweise reduziert, bis das Ergebnis wieder positiv ist. Dabei kommt es zu einer zeitweiligen reduzierten Rückspeisung elektrischer Energie, die aber nur für kurze Zeit gegeben ist.

Mit dem Verfahren nach der Erfindung wird insbesondere der Vorteil erzielt, dass eine Rückspeisung elektrischer Energie aus Schienenfahrzeugen auch dann möglich ist, wenn eine unkontrollierte Rückspeisung in das öffentliche Netz verboten ist.

## Patentansprüche

1. Verfahren zur Rückspeisung elektrischer Energie von Schienenfahrzeugen über den Fahrdraht, **dadurch gekennzeichnet, dass** der Fahrdraht mit einem Versorgungsnetz des Verkehrsbetriebes in Verbindung steht, das mit einem öffentlichen Netz verbunden ist, dass der Einspeisestrom vom öffentlichen Netz in das Versorgungsnetz gemessen wird, dass der maximale Rückspeisestrom vom Fahrdraht in das Versorgungsnetz aus der Summe der maximalen Rückspeiseleistungen von Unterwerken, die sich zwischen dem Fahrdraht und dem Versorgungsnetz befinden, berechnet wird, dass in einer Steuereinheit die Differenz aus Einspeisestrom und berechnetem Rückspeisestrom bestimmt wird und dass bei negativem Ergebnis über eine Steuereinrichtung die Rückspeisung in das Versorgungsnetz erfolgt.

2. Verfahren nach Anspruch 1, **dadurch gekennzeichnet, dass** die Rückspeisung unterbrochen wird, bis das Ergebnis wieder positiv ist.

3. Verfahren nach Anspruch 1, **dadurch gekennzeichnet, dass** die Rückspeisung schrittweise reduziert wird, bis das Ergebnis wieder positiv ist.
